(19) Europäisches Patentamt
European Patent Office
Office européen des brevets

(11) **EP 4 443 031 A1**

(12) **EUROPEAN PATENT APPLICATION**
published in accordance with Art. 153(4) EPC

(43) Date of publication:
**09.10.2024 Bulletin 2024/41**

(21) Application number: **22900571.5**

(22) Date of filing: **30.11.2022**

(51) International Patent Classification (IPC):
*F16K 1/02* (2006.01)     *F16K 1/32* (2006.01)
*F16K 1/38* (2006.01)     *F16K 1/42* (2006.01)

(52) Cooperative Patent Classification (CPC):
**F16K 1/42; F16K 25/005; F16K 31/04; F16K 31/50;
F16K 39/022;** Y02B 30/70

(86) International application number:
**PCT/CN2022/135694**

(87) International publication number:
**WO 2023/098767 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 CN 202123009820 U**

(71) Applicant: **Zhejiang Dunan Artificial Environment
Co., Ltd.
Shaoxing
Zhejiang 311835 (CN)**

(72) Inventors:
- JIN, Ju
  **Shaoxing, Zhejiang 311835 (CN)**
- SHA, Haijian
  **Shaoxing, Zhejiang 311835 (CN)**
- WANG, Fugang
  **Shaoxing, Zhejiang 311835 (CN)**

(74) Representative: **Berggren Oy
P.O. Box 16
Eteläinen Rautatiekatu 10A
00101 Helsinki (FI)**

(54) **ELECTRONIC EXPANSION VALVE**

(57)     An electronic expansion valve, including: a valve seat (10); a valve core sleeve (90) fixed together with the valve seat by welding to form a welded structure; and a mounting base body (100) provided with a second mounting channel, both the valve seat and the valve core sleeve being mounted in the second mounting channel, wherein an outer wall of the valve seat or the valve core sleeve is provided with an avoidance space to avoid the welded structure, or an inner wall of the mounting base body is provided with an avoidance space to avoid the welded structure. The electronic expansion valve can solve the technical problem in the related art that it is inconvenient to mount the valve seat on the mounting base body.

Fig. 1

EP 4 443 031 A1

# Description

## Cross-Reference to Related Application

The present application claims priority to Chinese Patent Application No. 202123009820.1, filed to the Chinese Patent Office on November 30, 2021 and entitled "Electronic Expansion Valve".

## Technical Field

The present disclosure relates to the technical field of electronic expansion valves, and in particular to an electronic expansion valve.

## Background

At present, an electronic expansion valve in the art known to inventors includes a valve seat, a valve core, and a valve needle. The valve needle is movably disposed in the valve seat. One end of the valve core is inserted into the valve seat, the other end of the valve core extends out of the valve seat, and the valve core is provided with a valve port to block or avoid the valve port by means of the valve needle. The electronic expansion valve further includes a valve seat and a valve core sleeve. In order to improve the arrangement stability of the valve core, the valve seat and the valve core sleeve are generally welded to form a welded structure.

However, when the valve seat is mounted on a mounting base body, it is often hindered by the welded structure, which is not conducive to smoothly mounting the valve seat on the mounting base body.

## Summary

The main purpose of the present disclosure is to provide an electronic expansion valve to solve the technical problem in the art known to inventors that it is inconvenient to mount a valve seat on a mounting base body.

In order to achieve the above purpose, the present disclosure provides an electronic expansion valve, including: a valve seat; a valve core sleeve fixed together with the valve seat by welding to form a welded structure; and a mounting base body provided with a second mounting channel, both the valve seat and the valve core sleeve being disposed in the second mounting channel. An outer wall of the valve seat or an outer wall of the valve core sleeve is provided with an avoidance space to avoid the welded structure, or an inner wall of the mounting base body is provided with an avoidance space to avoid the welded structure.

In some embodiments, an end of the valve seat or an end of the valve core sleeve is provided with an avoidance notch, the avoidance notch forms the avoidance space, and the valve core sleeve and the valve seat are welded at the avoidance notch.

In some embodiments, the welded structure is a welded ring structure, the valve core sleeve and the valve seat are welded at the avoidance notch to form the welded ring structure, an outer diameter of the welded ring structure is $d_1$, an outer diameter of the valve seat is $d_2$, and an outer diameter of the valve core sleeve is $d_3$, where $d_1 \leq d_2$ and/or $d_1 \leq d_3$.

In some embodiments, the welded structure is a welded ring structure, and the valve core sleeve is welded to the end of the valve seat to form the welded ring structure. The mounting base body is provided with an avoidance recess part, and the avoidance recess part and the welded ring structure are disposed oppositely to avoid the welded ring structure by means of the avoidance recess part.

In some embodiments, an outer diameter of the welded ring structure is $d_1$, and an outer diameter of the valve seat is $d_2$, where $d_1 > d_2$.

In some embodiments, the valve seat is provided with a first mounting channel. The electronic expansion valve further includes a valve needle, which is movably disposed in the first mounting channel; and a drive assembly, which is disposed at one end of the valve seat, the drive assembly being in transmission connection with the valve needle to drive the valve needle to move.

In some embodiments, the valve core sleeve is disposed at one end, away from the drive assembly, of the valve seat.

In some embodiments, the electronic expansion valve further includes a valve core. The valve core is mounted in the first mounting channel, and the valve core is provided with a valve port to open or close the valve port by means of the valve needle. The valve core sleeve includes a main body part and a positioning part which are connected with each other, at least part of the main body part being inserted into the first mounting channel, and an end of the main body part abutting against an end of the valve core. The positioning part protrudes from an outer wall of the main body part, the positioning part is configured for abutting and positioning with an end of the valve seat, and the positioning part is fixed together with the end of the valve seat by welding to form the welded structure.

In some embodiments, one end of the first mounting channel forms a first mounting port, an other end of the first mounting channel forms a second mounting port, the first mounting port is disposed above the second mounting port, a cross-sectional area of the second mounting port is greater than a cross-sectional area of the first mounting port, and the valve core sleeve is mounted at the second mounting port. A cross-sectional area of the valve needle is greater than the cross-sectional area of the first mounting port, and the cross-sectional area of the valve needle is less than the cross-sectional area of the second mounting port, so that the valve needle is mounted into the first mounting channel through the second mounting port.

In some embodiments, the electronic expansion valve further includes a valve core. The valve core is disposed in the first mounting channel, and the valve core is provided with a valve port to open or close the valve port by means of the valve needle. The valve core is made of a material with a hardness smaller than that of the valve needle, an inner wall of the valve core or an end surface of the valve core forms a sealing surface, and the sealing surface cooperates with an outer wall surface of the valve needle to form a soft sealing structure.

In some embodiments, the inner wall of the valve core forms the sealing surface, the valve core is provided with a first end and a second end which are disposed oppositely, the first end is provided at a side, close to the valve needle, of the second end, and a circulation area of the sealing surface is gradually reduced in an extending direction from the first end to the second end.

In some embodiments, the electronic expansion valve further includes: a spring sleeve and a spring, one end of the spring sleeve being sleeved on an end of the valve needle, and the spring being disposed in the spring sleeve; a screw, which is provided at an other end of the spring sleeve; and a bearing, which is sleeved on the screw, the bearing being disposed between the screw and the spring sleeve.

By applying the technical solution of the present disclosure, the valve core is mounted in the first mounting channel, and the valve core is abutted and positioned by means of the positioning part of the valve core sleeve, so that the valve core can be conveniently and stably positioned in the first mounting channel. Due to the fact that the positioning part of the valve core sleeve and the end of the valve seat are abutted and positioned and fixed by welding, the valve core sleeve can be stably fixed to the valve seat, thereby ensuring the stability of the position of the valve core sleeve, and then better ensuring the mounting stability of the valve core. The outer wall of the valve seat or the valve core sleeve is provided with the avoidance space to avoid the welded structure, or the inner wall of the mounting base body is provided with the avoidance space to avoid the welded structure, so that the welded structure is avoided by means of the avoidance space, which can conveniently avoid the situation that it is inconvenient to mount the valve seat on the mounting base body due to the protrusion of the welded structure, thereby conveniently and smoothly mounting the valve seat on the mounting base body.

## Brief Description of the Drawings

The drawings of the specification, which constitute a part of the present disclosure, are intended to provide a further understanding of the present disclosure, and the exemplary embodiments of the present disclosure and the description thereof are intended to explain the present disclosure and do not constitute an undue limitation on the present disclosure. In the drawings:

Fig. 1 illustrates a schematic structural diagram of a local structure of an electric valve according to an embodiment of the present disclosure.

Fig. 2 illustrates an exploded view of a local structure in Fig. 1.

Fig. 3 illustrates a schematic diagram of a mounting structure of a screw, a bearing, and a spring sleeve according to an embodiment of the present disclosure.

Fig. 4 illustrates a schematic structural diagram of a bearing sleeved on a screw according to an embodiment of the present disclosure.

Fig. 5 illustrates a schematic structural diagram of a structure in Fig. 1 mounted on a mounting base body.

Herein, the above drawings include the following reference signs.

10. Valve seat; 11. Avoidance notch; 20. Valve needle; 30. Valve core; 31. Sealing surface; 41. First sealing piece; 42. Second sealing piece; 43. Third sealing piece; 50. Spring sleeve; 60. Spring; 70. Screw; 80. Bearing; 90. Valve core sleeve; 91. Main body part; 92. Positioning part; 100. Mounting base body.

## Detailed Description of the Embodiments

It is to be noted that the embodiments in the present disclosure and features in the embodiments may be combined with each other without conflict. The present disclosure is described in detail below with reference to the drawings and in conjunction with the embodiments.

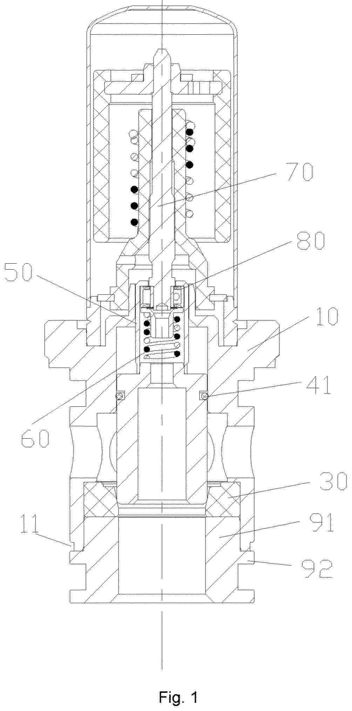

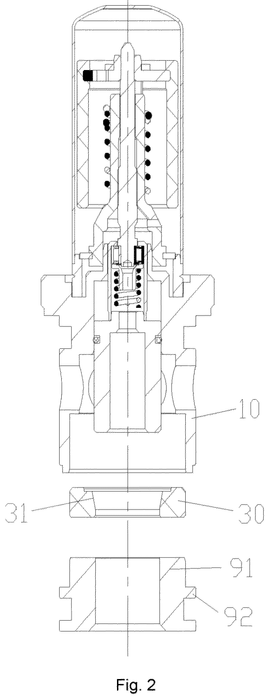

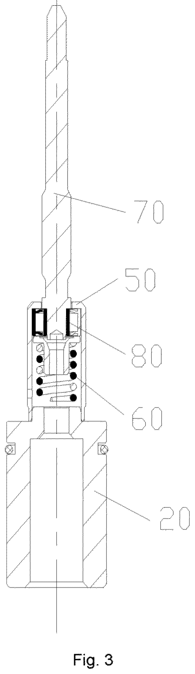

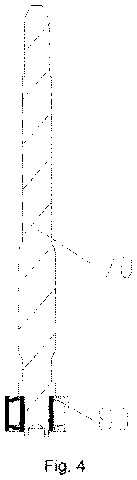

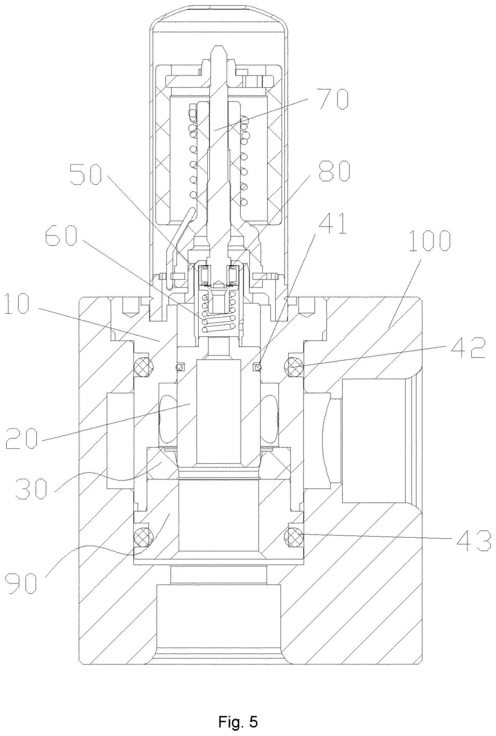

As shown in Fig. 1 to Fig. 5, some embodiments of the present disclosure provides an electronic expansion valve, including a valve seat 10, a valve needle 20, a drive assembly, a valve core sleeve 90, and a mounting base body 100. The valve seat 10 is provided with a first mounting channel, and the valve needle 20 is movably disposed in the first mounting channel. The drive assembly is provided at one end of the valve seat 10, and the drive assembly is in transmission connection with the valve needle 20 to drive the valve needle 20 to move. The valve core sleeve 90 is mounted at one end, away from the drive assembly, of the valve seat 10, and the valve core sleeve 90 is fixed together with the valve seat 10 by welding to form a welded structure. The mounting base body 100 is provided with a second mounting channel, and both the valve seat 10 and the valve core sleeve 90 are mounted in the second mounting channel. An outer wall of the valve seat 10 or an outer wall of the valve core sleeve 90 is provided with an avoidance space to avoid the welded structure, or an inner wall of the mounting base body 100 is provided with an avoidance space to avoid the welded structure.

By using the electronic expansion valve provided in the embodiments, the valve core 30 is mounted in the first mounting channel, and the valve core 30 is abutted and positioned by the positioning part 92 of the valve core sleeve 90, so that the valve core 30 can be conveniently and stably positioned in the first mounting channel. Due to the fact that the positioning part 92 of the valve core sleeve 90 and the end of the valve seat 10 are abutted and positioned and fixed by welding, the valve core sleeve 90 can be stably fixed to the valve seat 10, thereby ensuring the stability of the position of the valve core sleeve 90, and then better ensuring the mounting stability of the valve core 30. The outer wall of the valve seat 10 or the valve core sleeve 90 is provided with the avoidance space to avoid the welded structure, or the inner wall of the mounting base body 100 is provided with an avoidance space to avoid the welded structure, so that the welded structure is avoided by means of the avoidance space, which can conveniently avoid the situation that it is inconvenient to mount the valve seat 10 on the mounting base body 100 due to the protrusion of the welded structure, thereby conveniently and smoothly mounting the valve seat 10 on the mounting base body 100. Therefore, the technical solution provided by the embodiment can solve the technical problem in the related art that it is inconvenient to mount the valve seat 10 on the mounting base body 100.

In some embodiments, an end of the valve seat 10 or an end of the valve core sleeve 90 in the embodiments is provided with an avoidance notch 11, the avoidance notch 11 forms the avoidance space, and the valve core sleeve 90 and the valve seat 10 are welded at the avoidance notch 11. With such a structural arrangement, the situation that the mounting of the valve seat 10 is affected by the protrusion of welding slag generated by the welded structure formed by the positioning part 92 and the valve seat 10 can be conveniently prevented. In some embodiments, the valve seat 10 and the positioning part 92 are in self-melting connection by using laser welding to generate welding slag, so that the avoidance notch 11 can prevent the welding slag from protruding and affecting the mounting.

In some embodiments, the welded structure is a welded ring structure, the valve core sleeve 90 and the valve seat 10 are welded at the avoidance notch 11 to form the welded ring structure, an outer diameter of the welded ring structure is $d_1$, an outer diameter of the valve seat 10 is $d_2$, and an outer diameter of the valve core sleeve 90 is $d_3$, where $d_1 \leq d_2$ and/or $d_1 \leq d_3$. In some embodiments, $d_1 \leq d_2$ and $d_1 \leq d_3$, so that the situation that the valve seat 10 is mounted in the mounting base body 100 or the valve body due to the protrusion of the welded structure at the position is prevented, and the mounting reliability is ensured.

In another implementation, the positioning part 92 is welded to the end of the valve seat 10 to form a welded ring structure, that is, the welded structure is a ring-ring structure. The electronic expansion valve further includes a mounting base body 100. The mounting base body 100 is provided with a second mounting channel, and the valve seat 10, the valve core 30, and the valve core sleeve 90 are all mounted in the second mounting channel. The mounting base body 100 is provided with an avoidance recess part, and the avoidance recess part and the welded ring structure are disposed oppositely to avoid the welded ring structure by means of the avoidance recess part. With such a structural arrangement, the situation that the mounting of the valve seat 10 is affected by the protrusion of the welding slag generated by welding can be effectively avoided by means of the avoidance recess part, thereby ensuring the mounting reliability.

In the embodiment, the outer diameter of the welded ring structure is d1, and the outer diameter of the valve seat 10 is $d_2$, where $d_1 > d_2$. With such a structural arrangement, the avoidance recess can conveniently and effectively avoid the welded ring structure, so as to facilitate smooth mounting.

The electronic expansion valve further includes a valve core 30. The valve core 30 is mounted in the first mounting channel, and the valve core 30 is provided with a valve port to open or close the valve port by means of the valve needle 20. The valve core sleeve 90 is mounted at one end, away from the valve needle 20, of the valve core 30. The valve core sleeve 90 includes a main body part 91 and a positioning part 92 connected with each other. At least part of the main body part 91 is inserted in the first mounting channel, and an end of the main body part 91 abuts against an end of the valve core 30. The main body part 92 protrudes from an outer wall of the main body part 91, the positioning part 92 is configured for abutting and positioning with the end of the valve seat 10, and the positioning part 92 and the end of the valve seat 10 are fixed by welding. With such a structural arrangement, the structural layout can be optimized conveniently, and the connection stability and reliability of the structure can be improved. In some embodiments, the welding manner can be laser welding.

In the above two embodiments, one end of the first mounting channel forms a first mounting port, the other end of the first mounting channel forms a second mounting port, the first mounting port is disposed above the second mounting port, a cross-sectional area of the second mounting port is greater than a cross-sectional area of the first mounting port, and the valve core sleeve 90 is mounted at the second mounting port. The cross-sectional area of the valve needle 20 is greater than that of the first mounting port, and the cross-sectional area of the valve needle 20 is less than that of the second mounting port, so that the valve needle 20 is mounted into the first mounting channel through the second mounting port. With such a structural arrangement, the valve needle 20 can be conveniently mounted in the first mounting channel through the second mounting port, so as to invert the valve needle 20, thereby facilitating mounting and dismounting.

In the above embodiments, the valve core 30 is of a tubular structure, and the shape of the valve core 30 matches the shape of the second mounting port, so that the valve core 30 is mounted into the first mounting channel through the second mounting port. With such a structural arrangement, the inversion of the valve core 30 is facilitated, and the valve core 30 is mounted from the bottom into the first mounting channel, thereby facilitating the mounting operation. Due to the fact that the valve core 30 can be mounted from the second mounting port, the valve core 30 can be of a large caliber, thereby achieving large-flow communication.

In the above embodiments, the electronic expansion valve further includes a valve core 30. The valve core 30 is mounted in the first mounting channel, and the valve core 30 is provided with a valve port to open or close the valve port by means of the valve needle 20. The valve core 30 is made of a material with a hardness smaller than that of the valve needle 20, an inner wall of the valve core 30 or an end surface of the valve core 30 forms a sealing surface 31, and the sealing surface 31 cooperates with an outer wall surface of the valve needle 20 to form a soft sealing structure. In this way, leakage between the valve core 30 and the valve seat 10 can be avoided by means of the soft sealing structure, thereby improving the sealing performance of the electronic expansion valve. In some embodiments, the valve core 30 is made of a non-metal material, and the valve core 30 is mainly made of a plastic material, so that after the valve core 30 made of the non-metal material and the valve needle 20 made of the metal material are mounted, the non-metal material is a soft material compared to the metal material, and the sealing performance can be conveniently improved after the hard material and the soft material are mounted together.

The valve core 30 in the above embodiment is made of a polytetrafluoroethylene material to better improve the sealing performance of the electric valve.

In some embodiments, the inner wall of the valve core 30 forms the sealing surface 31, the valve core 30 is provided with a first end and a second end which are disposed oppositely, the first end is provided at a side, close to the valve needle 20, of the second end, and a circulation area of the sealing surface 31 is gradually reduced in an extending direction from the first end to the second end. With such a structural arrangement, the sealing performance between the valve core 30 and the valve core 20 can be conveniently improved, and the leakage condition between the valve core 30 and the valve needle 20 can be reduced.

In the above two embodiments, the electronic expansion valve further includes a spring sleeve 50, a spring 60, a screw 70, and a bearing 80. One end of the spring sleeve 50 is sleeved at an end of the valve needle 20, and the spring 60 is mounted in the spring sleeve 50. The screw 70 is disposed at the other end of the spring sleeve 50. The bearing 80 is sleeved on the screw 70, and the bearing 80 is disposed between the screw 70 and the spring sleeve 50. With such a structural arrangement, due to the fact that the bearing 80 is provided between the screw 70 and the spring sleeve 50, a soft seal is provided between the valve core 30 and the valve needle 20, so that the friction between the valve core 30 and the valve needle 20 is smaller than the friction between the valve core 30 and the valve seat 10, thereby avoiding the problem of abrasion of a soft sealing valve port.

In some embodiments, the electronic expansion valve further includes a drive assembly. The drive assembly is configured to drive the valve needle 20 to move. The drive assembly includes a rotor assembly and a nut assembly. The rotor assembly is sleeved on an outer side of the nut assembly, one end, away from the valve needle 20, of the screw 70 is fixedly connected with the rotor assembly, and the rotor assembly drives the valve needle 20 to move in the axial direction through the screw 70, so as to adjust the opening degree of the valve port. An internal thread is provided in the nut assembly and is in threaded connection with the valve needle 20, and the nut assembly is fixedly connected with the valve seat 10 through a connecting piece.

In the above embodiments, the valve needle 20 is provided with a first sealing piece 41, and the first sealing piece 41 is disposed between the valve needle 20 and the valve seat 10, so as to improve the sealing performance between the valve needle 20 and the valve seat 10. A second sealing piece 42 is provided between the mounting base body 100 and the valve seat 10, and a third sealing piece 43 is provided between the mounting base body 100 and the valve core sleeve 90. With such a structural arrangement, the sealing performance the electronic expansion valve can be better improved.

From the above description, it can be seen that the above embodiments of the present disclosure achieve the following technical effects: the mounting stability of the valve core 30 is improved, and smooth assembly of the valve core 30 is facilitated.

It is to be noted that terms used herein are only for the purpose of describing the specific implementations and not intended to limit exemplary implementations of the present disclosure. For example, singular forms, used herein, are also intended to include plural forms, unless otherwise clearly pointed out. In addition, it is also to be understood that terms "contain" and/or "include" used in the specification refer/refers to existence of features, steps, operations, apparatuses, components and/or combinations thereof.

Unless otherwise specified, relative arrangements of components and steps elaborated in these embodiments, numeric expressions and numeric values do not limit the scope of the present disclosure. Furthermore, it is to be understood that for ease of descriptions, the size of each part shown in the drawings is not drawn in accordance with an actual proportional relation. Technologies, methods and devices known by those of ordinary skill in the art may not be discussed in detail. However, where appropriate, the technologies, the methods and the devices shall be regarded as part of the authorized description. In all examples shown and discussed herein, any specific value should be interpreted as only exemplar values instead of limited values. As a result, other examples of the exemplary embodiments may have different values. It is to be noted that similar marks and letters represent similar items in the following drawings. As a result, once a certain item is defined in one drawing, it is unnecessary to further discus the certain item in the subsequent drawings.

In the description of the present disclosure, it is to be understood that the orientations or positional relationships indicated by the orientation words "front, rear, upper, down, left and right", "transverse, longitudinal, vertical and horizontal", "top and bottom", etc. are based on the orientations or positional relationships shown in the drawings, and are only for the convenience of describing the present disclosure and simplifying the description. Unless stated to the contrary, these orientation words do not indicate or imply that the apparatus or element referred to must have a specific orientation, be constructed and operated in a specific orientation, and therefore cannot be construed as limiting the scope of protection of the present disclosure. The orientation words "inside and outside" refer to inside and outside relative to the outline of each part itself.

For ease of description, spatially relative terms such as "over", "above", "on an upper surface" and "upper" may be used herein for describing a spatial position relation between a device or feature and other devices or features shown in the drawings. It should be understood that the spatially relative terms are intended to contain different orientations of the device in usage or operation besides the orientations of the devices described in the drawings. For example, if the devices in the drawings are inverted, those described as "above other devices or structures" or "over other devices or structures" will then be positioned as "below other devices or structures" or "under other devices or structures". Thus, the exemplary term "above" may include both "above" and "below" orientations. The device may also be positioned in various other ways (rotated 90 degrees or at other orientations) and the spatially relative descriptions used herein are interpreted accordingly.

Furthermore, it is to be noted that the use of the words "first", "second" and the like to define parts is only for the convenience of distinguishing the corresponding parts, unless otherwise stated, the words have no special meaning, and therefore cannot be construed as limiting the scope of protection of the present disclosure.

The above are only the preferred embodiments of the present disclosure, and are not intended to limit the present disclosure, and for those of ordinary skill in the art, various modifications and changes can be made to the present disclosure. Any modifications, equivalent substitutions, improvements, etc. within the spirit and scope of the present disclosure shall be included in the scope of protection of the present disclosure.

## Claims

1. An electronic expansion valve, comprising:

   a valve seat (10);
   a valve core sleeve (90), wherein the valve core sleeve (90) is fixed together with the valve seat (10) by welding to form a welded structure; and
   a mounting base body (100), wherein the mounting base body (100) is provided with a second mounting channel, and both the valve seat (10) and the valve core sleeve (90) are disposed in the second mounting channel;
   wherein an outer wall of the valve seat (10) or an outer wall of the valve core sleeve (90) is provided with an avoidance space to avoid the welded structure, or an inner wall of the mounting base body (100) is provided with an avoidance space to avoid the welded structure.

2. The electronic expansion valve as claimed in claim 1, wherein an end of the valve seat (10) or an end of the valve core sleeve (90) is provided with an avoidance notch (11), the avoidance notch (11) forms the avoidance space, and the valve core sleeve (90) and the valve seat (10) are welded at the avoidance notch (11).

3. The electronic expansion valve as claimed in claim 2, wherein the welded structure is a welded ring structure, the valve core sleeve (90) and the valve seat (10) are welded at the avoidance notch (11) to form the welded ring structure, an outer diameter of the welded ring structure is $d_1$, an outer diameter of the valve seat (10) is $d_2$, and an outer diameter of the valve core sleeve (90) is $d_3$;

$$d_1 \leq d_2;$$

and/or,

$$d_1 \leq d_3.$$

4. The electronic expansion valve as claimed in claim 1, wherein the welded structure is a welded ring structure, and the valve core sleeve (90) is welded to an end of the valve seat (10) to form the welded ring structure; and the mounting base body (100) is provided with an avoidance recess part, and the avoidance recess part and the welded ring structure are disposed oppositely to avoid the welded ring structure by means of the avoidance recess part.

5. The electronic expansion valve as claimed in claim 4, wherein an outer diameter of the welded ring structure is $d_1$, and an outer diameter of the valve seat

$(10)$ is $d_2$, where $d_1 > d_2$.

6. The electronic expansion valve as claimed in claim 1, wherein the valve seat (10) is provided with a first mounting channel; the electronic expansion valve further comprises:

   a valve needle (20), which is movably disposed in the first mounting channel; and
   a drive assembly, which is disposed at one end of the valve seat (10), wherein the drive assembly is in transmission connection with the valve needle (20) to drive the valve needle (20) to move.

7. The electronic expansion valve as claimed in claim 6, wherein the valve core sleeve (90) is disposed at one end, away from the drive assembly, of the valve seat (10).

8. The electronic expansion valve as claimed in claim 6, further comprising a valve core (30), wherein the valve core (30) is disposed in the first mounting channel, and the valve core (30) is provided with a valve port to open or close the valve port by means of the valve needle (20); the valve core sleeve (90) comprises a main body part (91) and a positioning part (92) which are connected with each other, wherein at least part of the main body part (91) is inserted into the first mounting channel, and an end of the main body part (91) abuts against an end of the valve core (30); and the positioning part (92) protrudes from an outer wall of the main body part (91), the positioning part (92) is configured for abutting and positioning with an end of the valve seat (10), and the positioning part (92) is fixed together with the end of the valve seat (10) by welding to form the welded structure.

9. The electronic expansion valve as claimed in claim 6, wherein one end of the first mounting channel forms a first mounting port, an other end of the first mounting channel forms a second mounting port, the first mounting port is disposed above the second mounting port, a cross-sectional area of the second mounting port is greater than a cross-sectional area of the first mounting port, and the valve core sleeve (90) is disposed at the second mounting port; wherein a cross-sectional area of the valve needle (20) is greater than the cross-sectional area of the first mounting port, and the cross-sectional area of the valve needle (20) is less than the cross-sectional area of the second mounting port, so that the valve needle (20) is disposed into the first mounting channel through the second mounting port.

10. The electronic expansion valve as claimed in claim 6, further comprising a valve core (30), wherein the valve core (30) is disposed in the first mounting channel, and the valve core (30) is provided with a valve port to open or close the valve port by means of the valve needle (20); and the valve core (30) is made of a material with a hardness smaller than that of the valve needle (20), an inner wall of the valve core (30) or an end surface of the valve core (30) forms a sealing surface (31), and the sealing surface (31) cooperates with an outer wall surface of the valve needle (20) to form a soft sealing structure.

11. The electronic expansion valve as claimed in claim 10, wherein the inner wall of the valve core (30) forms the sealing surface (31), the valve core (30) is provided with a first end and a second end which are disposed oppositely, the first end is provided at a side, close to the valve needle (20), of the second end, and a circulation area of the sealing surface (31) is gradually reduced in an extending direction from the first end to the second end.

12. The electronic expansion valve as claimed in any one of claims 6 to 11, further comprising:

   a spring sleeve (50) and a spring (60), wherein one end of the spring sleeve (50) is sleeved at an end of the valve needle (20), and the spring (60) is disposed in the spring sleeve (50);
   a screw (70), which is disposed at an other end of the spring sleeve (50); and
   a bearing (80), which is sleeved on the screw (70), wherein the bearing (80) is disposed between the screw (70) and the spring sleeve (50).

70

80

50

10

41

60

30

11

91

92

Fig. 1

Fig. 2

Fig. 3

Fig. 4

Fig. 5

## INTERNATIONAL SEARCH REPORT

| International application No. |
| --- |
| **PCT/CN2022/135694** |

| A. | CLASSIFICATION OF SUBJECT MATTER |
| --- | --- |

F16K1/02(2006.01)i;F16K1/32(2006.01)i;F16K1/38(2006.01)i;F16K1/42(2006.01)i

According to International Patent Classification (IPC) or to both national classification and IPC

| B. | FIELDS SEARCHED |
| --- | --- |

Minimum documentation searched (classification system followed by classification symbols)

IPC:F16K

Documentation searched other than minimum documentation to the extent that such documents are included in the fields searched

Electronic data base consulted during the international search (name of data base and, where practicable, search terms used)

CNKI, CNABS, VEN: 膨胀阀, 阀座, 焊接, 阀芯, 套, 阀针, 弹簧, expansion, valve, seat, weld+, spool, sleeve, needle, spring

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 216742870 U (DUN'AN AUTOMOBILE THERMAL MANAGEMENT TECHNOLOGY CO., LTD.) 14 June 2022 (2022-06-14)<br>description, paragraphs 25-40, and figures 1-5 | 1-12 |
| A | CN 107304843 A (ZHEJIANG DUN'AN ARTIFICIAL ENVIRONMENT CO., LTD.) 31 October 2017 (2017-10-31)<br>entire document | 1-12 |
| A | CN 107435753 A (ZHEJIANG SANHUA INTELLIGENT CONTROLS CO., LTD.) 05 December 2017 (2017-12-05)<br>entire document | 1-12 |
| A | CN 111059295 A (ZHEJIANG DUNAN HETIAN METALS CO., LTD.) 24 April 2020 (2020-04-24)<br>entire document | 1-12 |
| A | CN 112524261 A (GUANGDONG WELLING MOTOR MANUFACTURING CO., LTD.) 19 March 2021 (2021-03-19)<br>entire document | 1-12 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 February 2023** | **27 February 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
|---|
| **PCT/CN2022/135694** |

**C.** **DOCUMENTS CONSIDERED TO BE RELEVANT**

| Category* | Citation of document, with indication, where appropriate, of the relevant passages | Relevant to claim No. |
|---|---|---|
| A | US 2015048266 A1 (EMERSON CLIMATE TECH SUZHOU CO.) 19 February 2015 (2015-02-19)<br>    entire document | 1-12 |
| A | US 2021239378 A1 (EMERSON CLIMATE TECH SUZHOU CO., LTD.) 05 August 2021 (2021-08-05)<br>    entire document | 1-12 |

Form PCT/ISA/210 (second sheet) (July 2022)

## INTERNATIONAL SEARCH REPORT
### Information on patent family members

International application No.

**PCT/CN2022/135694**

| Patent document cited in search report | | | Publication date (day/month/year) | Patent family member(s) | | | Publication date (day/month/year) |
|---|---|---|---|---|---|---|---|
| CN | 216742870 | U | 14 June 2022 | WO | 2022193812 | A1 | 22 September 2022 |
| | | | | CN | 216742869 | U | 14 June 2022 |
| | | | | CN | 216742872 | U | 14 June 2022 |
| | | | | CN | 216742868 | U | 14 June 2022 |
| | | | | CN | 115111378 | A | 27 September 2022 |
| | | | | CN | 216742871 | U | 14 June 2022 |
| CN | 107304843 | A | 31 October 2017 | | None | | |
| CN | 107435753 | A | 05 December 2017 | WO | 2017202366 | A1 | 30 November 2017 |
| | | | | KR | 20190010632 | A | 30 January 2019 |
| | | | | JP | 2019516941 | A | 20 June 2019 |
| | | | | JP | 6797214 | B2 | 09 December 2020 |
| CN | 111059295 | A | 24 April 2020 | | None | | |
| CN | 112524261 | A | 19 March 2021 | | None | | |
| US | 2015048266 | A1 | 19 February 2015 | US | 9435451 | B2 | 06 September 2016 |
| | | | | EP | 2821682 | A1 | 07 January 2015 |
| | | | | WO | 2013127276 | A1 | 06 September 2013 |
| US | 2021239378 | A1 | 05 August 2021 | EP | 3792529 | A1 | 17 March 2021 |
| | | | | WO | 2019214629 | A1 | 14 November 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202123009820